# EUROPÄISCHE PATENTANMELDUNG

(11) **EP 3 693 589 A1**
(43) Veröffentlichungstag der Anmeldung: **12.08.2020**
(21) Anmeldenummer: 20167115.3
(22) Anmeldetag: 25.04.2018
(51) Int. Cl.: F02D 41/00, F02D 13/02

(54) **BETRIEBSVERFAHREN FÜR EIN FAHRERASSISTENZSYSTEM UND KRAFTFAHRZEUG**

(30) Priorität: 18.05.2017 DE 102017004819
(62) Teilanmeldung aus: 18169184.1
(71) Anmelder: MAN Truck & Bus SE, 80995 München (DE)
(72) Erfinder: Hirschmann, Steffen, 80995 München (DE); Hyna, Dominic, 80995 München (DE)
(74) Vertreter: v. Bezold & Partner Patentanwälte - PartG mbB

(57) **Zusammenfassung**

Die Erfindung betrifft ein Betriebsverfahren für ein Fahrerassistenzsystem (6), insbesondere eine Geschwindigkeitsregelanlage, eines Kraftfahrzeugs (1). Das Betriebsverfahren weist das Ermitteln mindestens einer betriebsrelevanten Straßeneigenschaft einer Straße auf einer bevorstehenden Fahrtroute des Kraftfahrzeugs (1), wobei die betriebsrelevante Straßeneigenschaft einen Betrieb eines Verbrennungsmotors (2) des Kraftfahrzeugs (1) beeinflusst, auf. Das Betriebsverfahren weist das Bestimmen einer Fahrempfehlung in Abhängigkeit von der betriebsrelevanten Straßeneigenschaft auf der bevorstehenden Fahrtroute des Kraftfahrzeugs (1) auf. Das Betriebsverfahren weist das Einstellen des variablen Ventiltriebs (10) in Abhängigkeit von der bestimmten Fahrempfehlung auf.

## Beschreibung

Die Erfindung betrifft ein Betriebsverfahren für ein Fahrerassistenzsystem und ein Kraftfahrzeug.

Fahrerassistenzsysteme können in Kraftfahrzeugen zum Übernehmen bestimmter Aufgaben eingesetzt werden. Die Fahrerassistenzsysteme können dabei auf die Unterrichtung eines Fahrzeugführers beschränkt sein. Es ist allerdings auch möglich, dass Fahrerassistenzsysteme automatisch bestimmte Aspekte des Fahrbetriebs des Kraftfahrzeugs steuern. Zum Beispiel ermöglicht eine Geschwindigkeitsregelanlage das automatische Halten einer eingestellten Geschwindigkeit. Es sind auch sogenannte GPS-gesteuerte Geschwindigkeitsregelanlagen bekannt, die einen Streckenverlauf mit Steigungen und Gefälle im Voraus erfassen. Die Geschwindigkeitsregelanlage kann dann beispielsweise eine Fahrstufe und Geschwindigkeit im Sinne einer wirtschaftlichen Fahrweise anpassen und Rückschaltungen, wann immer es sinnvoll ist, unterdrücken.

Ein Betriebsverfahren für ein Fahrerassistenz ist beispielsweise in der DE 10 2010 048 323 A1 offenbart. Das Betriebsverfahren für ein Fahrerassistenzsystem unterstützt einen Fahrzeugführer eines Kraftfahrzeugs bei der Senkung eines Kraftstoffverbrauchs des Kraftfahrzeugs. Das Betriebsverfahren weist die folgenden Schritte auf: Bestimmung einer Fahrempfehlung zur Senkung des Kraftstoffverbrauchs des Kraftfahrzeugs; Ermittlung mindestens einer verbrauchsrelevanten Straßeneigenschaft einer Straße auf der bevorstehenden Fahrtroute des Kraftfahrzeugs, wobei die verbrauchsrelevante Straßeneigenschaft den Kraftstoffverbrauch des Kraftfahrzeugs beeinflusst; sowie Bestimmung der Fahrempfehlung, die aufgrund ihrer Darstellung über die zukünftige zeitliche Entwicklung geeignet ist, die Akzeptanz beim Fahrzeugführer zu erhöhen und Funktionsweise des Fahrerassistenzsystems plausibel zu machen.

Der Erfindung liegt die Aufgabe zu Grunde, ein verbessertes Betriebsverfahren für ein Fahrerassistenzsystem vorzusehen. Insbesondere sollen weitere Potenziale für die Kraftstoffeinsparung und den Betrieb von Abgasnachbehandlungssystemen ausgeschöpft werden.

Die Aufgabe wird gelöst durch ein Betriebsverfahren für ein Fahrerassistenzsystem und ein Kraftfahrzeug gemäß den unabhängigen Ansprüchen. Vorteilhafte Weiterbildungen sind in den abhängigen Ansprüchen und der Beschreibung angegeben.

Das Betriebsverfahren ist für ein Fahrerassistenzsystem, insbesondere eine Geschwindigkeitsregelanlage, vorzugsweise einen Satellitenstandortbestimmungsvorrichtung-gesteuerte Geschwindigkeitsregelanlage, eines Kraftfahrzeugs, vorzugsweise Nutzfahrzeugs, vorgesehen. Das Kraftfahrzeug weist einen Verbrennungsmotor mit einem variablen Ventiltrieb, insbesondere mit einer Mehrzahl von Schiebenockensystemen, zum Verstellen der Ventilsteuerkurven der Ein- und/oder Auslassventile des Verbrennungsmotors auf. Das Verfahren weist das Ermitteln mindestens einer betriebsrelevanten Straßeneigenschaft einer Straße auf einer bevorstehenden Fahrtroute des Kraftfahrzeugs auf. Die betriebsrelevante Straßeneigenschaft beeinflusst einen Betrieb des Verbrennungsmotors des Kraftfahrzeugs. Das Verfahren weist das Bestimmen einer Fahrempfehlung in Abhängigkeit von der betriebsrelevanten Straßeneigenschaft auf der bevorstehenden Fahrtroute des Kraftfahrzeugs und das Einstellen des variablen Ventiltriebs in Abhängigkeit von der bestimmten Fahrempfehlung auf.

Durch die Einstellung des variablen Ventiltriebs in Abhängigkeit von der bestimmten Fahrempfehlung können bisher nicht ausgeschöpfte Potenziale für die Kraftstoffeinsparung und den Betrieb von Abgasnachbehandlungssystemen ausgeschöpft werden.

Insbesondere kann eine betriebsrelevante Straßeneigenschaft einen Betrieb einer Abgasnachbehandlungseinrichtung, zum Beispiel eines SCR- oder Oxidationskatalysators, eine Last des Verbrennungsmotors und/oder einen Kraftstoffverbrauch des Verbrennungsmotors beeinflussen.

In einer besonders bevorzugten Ausführungsform ermöglicht der variable Ventiltrieb eine Verstellung der Ein- und/oder Auslassventile innerhalb eines vorbestimmten Stellbereichs. Die Fahrempfehlung kann dann zusätzlich in Abhängigkeit von dem vorbestimmten Stellbereich bestimmt.

In einer weiteren Ausführungsform weist das Betriebsverfahren das akustische, visuelle und/oder haptische Unterrichten eines Fahrzeugführers des Kraftfahrzeugs über die Fahrempfehlung auf. Damit kann die Akzeptanz gegenüber dem Fahrerassistenzsystem verbessert werden.

Alternativ oder zusätzlich weist das Betriebsverfahren das automatische Umsetzen der Fahrempfehlung durch das Kraftfahrzeug und/oder das Fahrerassistenzsystem auf. Folglich kann der Fahrzeugführer des Kraftfahrzeugs entlastet werden.

In einer Ausführungsvariante weist die betriebsrelevante Straßeneigenschaft ein Topologie, insbesondere ein Gefälle, eine Steigung und/oder Kurve der Straße, der bevorstehenden Fahrtroute auf. Somit kann die Fahrempfehlung der Topologie angepasst werden.

In einer weiteren Ausführungsvariante weist die betriebsrelevante Straßeneigenschaft eine auf der Straße geltende Verkehrsregelung, insbesondere eine Geschwindigkeitsbegrenzung und/oder eine Vorfahrtsregelung, auf. Folglich kann die Fahrempfehlung an die geltende Verkehrsregelung angepasst werden.

Zusätzlich oder alternativ kann die die betriebsrelevante Straßeneigenschaft eine aktuelle Verkehrssituation aufweisen. Dies hat den Vorteil, dass die Fahrempfehlung an die aktuelle Verkehrssituation angepasst werden kann.

In einem Ausführungsbeispiel weist das Verfahren das Ermitteln einer aktuellen Position des Kraftfahrzeugs mittels einer Standortbestimmungsvorrichtung, insbesondere mittels einer Satellitenstandortbestimmungsvorrichtung, auf.

In einem weiteren Ausführungsbeispiel weist das Verfahren das Ermitteln der bevorstehenden Fahrtroute des Kraftfahrzeugs in Abhängigkeit von einer aktuellen Position des Kraftfahrzeugs auf. Insbesondere kann die bevorstehende Fahrtroute des Kraftfahrzeugs aus einem Routenspeicher eines Navigationssystems ausgelesen und/oder beispielsweise über eine Datenverbindung empfangen werden.

In einer Weiterbildung weist das Verfahren das Auslesen der betriebsrelevanten Straßeneigenschaften aus einer Navigationsdatenbank und/oder das Empfangen der betriebsrelevanten Straßeneigenschaften beispielsweise über eine Datenverbindung auf.

In einer weiteren Ausführungsvariante weist das Verfahren das Bestimmen der Fahrempfehlung in Abhängigkeit von der betriebsrelevanten Straßeneigenschaft auf der bevorstehenden Fahrtroute des Kraftfahrzeugs und einer aktuellen Position des Kraftfahrzeugs auf.

In einer bevorzugten Ausführungsform stellt der variable Ventiltrieb die Steuerzeiten der Ein- und/oder Auslassventile in Abhängigkeit von der bestimmten Fahrempfehlung zylinderselektiv ein. Damit können je nach Anforderung kein Ventil, mehrere Ventile oder alle Ventile in Abhängigkeit von der Fahrempfehlung verstellt werden. Damit können weitere Potenziale insbesondere bezüglich eines kraftstoffeffizienten Verbrauchs ausgeschöpft werden.

Zum Beispiel kann der variable Ventiltrieb die Steuerzeiten nur für einen Teil der Ein- und/oder Auslassventile in Abhängigkeit von der bestimmten Fahrempfehlung verstellen.

In einem Ausführungsbeispiel weist die Fahrempfehlung einen, insbesondere automatischen, Gangwechsel in einen höheren Gang auf. Der variable Ventiltrieb wird dann in einen Hochschaltunterstützungsbetrieb zum Verkürzen einer Dauer des Gangwechsels geschaltet.

Der höhere Gang kann insbesondere eine höhere Übersetzung als ein aktueller Gang aufweisen.

In einem weiteren Ausführungsbeispiel weist die Fahrempfehlung einen Dauerbremsbetrieb des Verbrennungsmotors auf. Der variable Ventiltrieb kann dann in einen Motorbremsbetrieb geschaltet werden.

In einer bevorzugten Weiterbildung wird im Hochschaltunterstützungsbetrieb und/oder im Motorbremsbetrieb mindestens ein Auslassventil des Verbrennungsmotors im Verdichtungstakt und/oder im Ausschubtakt zur Kompression von Luft zunächst geschlossen gehalten und vor Erreichen eines oberen Totpunkts einer Kolbenbewegung zur Dekompression der verdichteten Luft geöffnet. Damit kann eine erhebliche Drehzahlabsenkung innerhalb einer kurzen Zeit ohne Betätigung einer Abgasdrosselklappe und einer damit einhergehenden Verschlechterung des Betriebs eines Turboladers erreicht werden.

In einer Ausführungsform wird eine Anzahl von Auslassventilen im Hochschaltunterstützungsbetrieb in Abhängigkeit von der betriebsrelevanten Straßeneigenschaft auf der bevorstehenden Fahrtroute des Kraftfahrzeugs, einer erforderlichen Drehzahlabsenkung für den Gangwechsel, einer erforderlichen Drehmomenterhöhung für den Gangwechsel, einer gewünschten Dauer des Gangwechsels, einer gewünschten Turboladerdrehzahl und/oder eines gewünschten Ladedrucks bestimmt.

Alternativ oder zusätzlich wird eine Anzahl von Auslassventilen im Motorbremsbetrieb in Abhängigkeit von der betriebsrelevanten Straßeneigenschaft auf der bevorstehenden Fahrtroute des Kraftfahrzeugs, insbesondere einem Gefälle und/oder einer Geschwindigkeitsbegrenzung, bestimmt. Somit können beispielsweise je nach Gefälle oder erforderlicher Geschwindigkeitsabsenkung eines, mehrere oder alle Auslassventile im Motorbremsbetrieb betrieben werden.

Im Motorbremsbetrieb und/oder Hochschulunterstützungsbetrieb kann insbesondere auf ein Einspritzen von Kraftstoff verzichtet werden und/oder eine Betätigung des mindestens einen Einlassventils unverändert bleiben.

Im Motorbremsbetrieb und/oder Hochschulunterstützungsbetrieb kann das Auslassventil insbesondere zwischen 100° KW und 60° KW vor dem Erreichen des oberen Totpunkts geöffnet werden. Alternativ oder zusätzlich kann das Auslassventil nach dem Öffnen im Ausschubtakt im Bereich zwischen dem oberem Totpunkt und 30° KW nach dem oberen Totpunkt schließen. Alternativ oder zusätzlich kann das Auslassventil nach dem Öffnen im Verdichtungstakt im Bereich zwischen dem unteren Totpunkt und 30° KW nach dem unteren Totpunkt schließen. Damit können ein wirkungsvoller Motorbremsbetrieb und Hochschulunterstützungsbetrieb dargestellt werden.

In einer weiteren Ausführungsform weist die Fahrempfehlung das Anpassen einer Abgastemperatur, das Anpassen eines Betriebspunkts eines Turboladers des Verbrennungsmotors, das Anpassen eines Luftdurchsatzes und/oder das Betreiben des Verbrennungsmotors in einem Schwachlastbereich auf. Der variable Ventiltrieb kann dann in einen Millerbetrieb geschaltet werden.

Der Schwachlastbereich kann sich insbesondere unterhalb eines Mitteldrucks des Verbrennungsmotors von 6 bar, 5 bar oder 4 bar erstrecken.

Im Millerbetrieb kann insbesondere ein Schließzeitpunkt eines Einlassventils gegenüber einem Normalbetrieb vorgezogen werden. Im Normalbetrieb schließt das Einlassventil im Bereich des Erreichens eines unteren Totpunkts einer Kolbenbewegung am Ende des Einlasstaktes. Im Millerbetrieb liegt der Schließzeitpunkt des Einlassventils vor dem Erreichen des unteren Totpunkts der Kolbenbewegung. Im Millerbetrieb kann der Schließzeitpunkt insbesondere gleich oder mehr als 5° KW (Kurbelwinkel), 10° KW, 20° KW oder 30° KW vor dem Schließzeitpunkt im Normalbetrieb liegen.

In einer Weiterbildung wird eine Anzahl von Einlassventilen im Millerbetrieb in Abhängigkeit von der betriebsrelevanten Straßeneigenschaft auf der bevorstehenden Fahrtroute des Kraftfahrzeugs, einer gewünschten Abgastemperatur, einem gewünschten Luftdurchsatz, einer Last des Verbrennungsmotors und/oder einem Betriebspunkts eines Turboladers des Verbrennungsmotors bestimmt. Folglich können je nach Situation nur eines, mehrere oder alle Einlassventile im Millerbetrieb betrieben werden.

In einem Ausführungsbeispiel weist jedes Schiebenockensystem einen auf einer Nockenwelle des Verbrennungsmotors drehfest und axial verschiebbar angeordneten Nockenträger mit einem ersten Nocken für einen Normalbetrieb und einen in einer Längsrichtung der Nockenwelle versetzt angeordneten zweiten Nocken für einen Motorbremsbetrieb, einen Hochschaltunterstützungsbetrieb und/oder einen Millerbetrieb auf. Das Schiebenockensystem setzt wahlweise den ersten Nocken und mindestens ein Auslassventil und/oder Einlassventil in Wirkverbindung oder den zweiten Nocken und mindestens ein Auslassventil und/oder Einlassventil in Wirkverbindung. Die Schiebenockensysteme bieten eine schnelle und zuverlässige Möglichkeit zum Umschalten zwischen verschiedenen Ventilsteuerkurven.

Die Erfindung betrifft auch ein Kraftfahrzeug, insbesondere Nutzfahrzeug. Das Nutzfahrzeug kann beispielsweise ein Omnibus oder ein Lastkraftwagen sein. Das Kraftfahrzeug weist eine Standortbestimmungsvorrichtung, insbesondere Satellitenstandortbestimmungsvorrichtung, auf. Das Kraftfahrzeug weist ein Fahrerassistenzsystem auf, das dazu ausgebildet ist, das Betriebsverfahren nach einem der vorherigen Ansprüche durchzuführen.

In einer Weiterbildung weist das Kraftfahrzeug ein Navigationssystem und/oder einen variablen Ventiltrieb für einen mehrere Zylinder aufweisenden Verbrennungsmotor des Kraftfahrzeugs auf. Der variable Ventiltrieb weist mindestens ein Einlassventil und/oder Auslassventil auf. Der variable Ventiltrieb weist mindestens eine Nockenwelle und mehrere Schiebenockensysteme für die mehreren Zylinder auf. Jedes Schiebenockensystem weist einen Nockenträger, der auf der Nockenwelle drehfest und axial verschiebbar angeordnet ist und einen ersten Nocken und einen zweiten Nocken aufweist, auf. Der erste Nocken und der zweite Nocken sind in einer Längsrichtung der Nockenwelle versetzt angeordnet.

In einer weiteren Ausführungsform weist der variable Ventiltrieb einen Phasensteller auf. Der Phasensteller ist dazu ausgebildet, einen Drehwinkel der Nockenwelle relativ zu einem Drehwinkel einer Kurbelwelle des Verbrennungsmotors zu verstellen. Somit kann der Phasensteller eine Verstellung der Steuerzeiten für die jeweiligen Ein- und/oder Auslassventile ermöglichen. Der Phasenversteller kann beispielsweise als hydraulischer Phasenversteller, insbesondere als ein Schwenkmotorphasenversteller, ausgebildet sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht eines Kraftfahrzeugs;
- Figur 2: eine perspektivische Ansicht eines variablen Ventiltriebs;
- Figur 3: eine perspektivische Ansicht eines einlassseitigen variablen Ventiltriebs;
- Figur 4: eine Längsschnittansicht des einlassseitigen variablen Ventiltriebs;
- Figur 5: eine perspektivische Ansicht eines auslassseitigen variablen Ventiltriebs;
- Figur 6: eine Längsschnittansicht des auslassseitigen variablen Ventiltriebs;
- Figur 7: ein Diagramm mit beispielhaften Ventilsteuerkurven und einem Zylinderdruckverlauf; und
- Figur 8: ein beispielhaftes Betriebsverfahren für ein Fahrerassistenzsystem.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

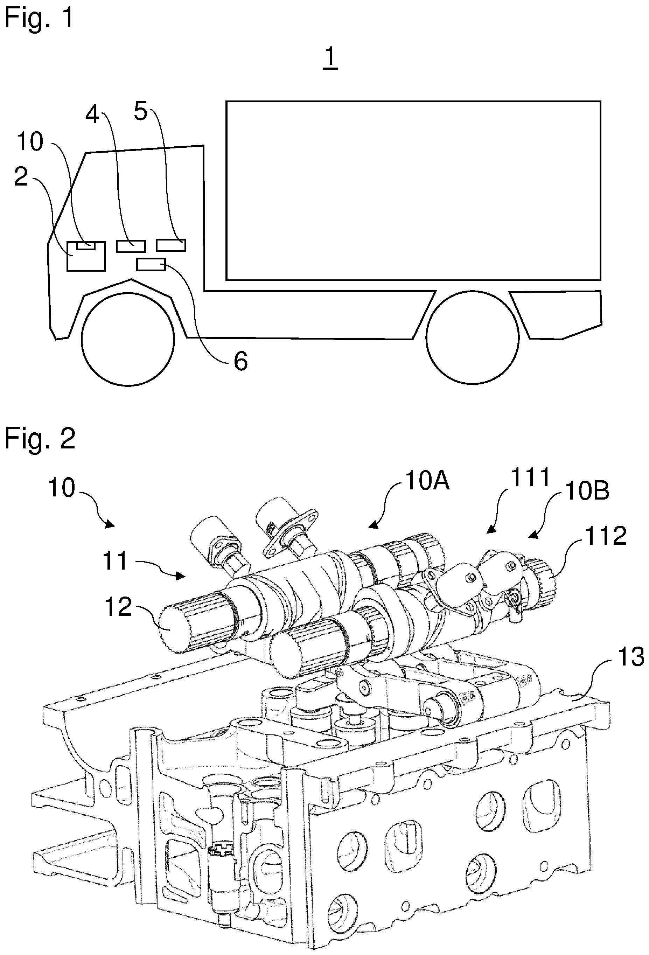

Die Figur 1 zeigt ein als Lastkraftwagen ausgebildetes Kraftfahrzeug 1. Alternativ kann auch ein anderes Nutzfahrzeug, wie beispielsweise ein Omnibus, oder ein anderes Kraftfahrzeug vorgesehen sein.

Das Kraftfahrzeug 1 weist einen Verbrennungsmotor 2 mit einem variablen Ventiltrieb 10 auf. Das Kraftfahrzeug 1 weist ferner eine Standortbestimmungsvorrichtung 4, ein Navigationssystem 5 und ein Fahrerassistenzsystem 6 auf.

Der Verbrennungsmotor 2 kann beispielsweise als ein Diesel-, Benzin- oder Gasmotor ausgebildet sein. Die Einlass- und Auslassventile (Ladungswechselventile) des Verbrennungsmotors 2 werden von einem variablen Ventiltrieb 10 betätigt. Der variable Ventiltrieb 10 ermöglicht eine Verstellung der Steuerzeiten der Ladungswechselventile. Insbesondere können die Ladungswechselventile zylinderselektiv verstellt werden.

Die Standortbestimmungsvorrichtung 4 ermöglicht die Bestimmung einer aktuellen Position des Kraftfahrzeug 1. Die Standardbestimmungsvorrichtung 4 kann beispielsweise eine Satellitenstandortbestimmungsvorrichtung, insbesondere eine GPS-Vorrichtung (engl. global positioning system), sein.

Das Navigationssystem 5 ermöglicht eine Navigation des Nutzfahrzeugs 1 basierend auf der aktuellen Position des Nutzfahrzeugs und einer Fahrtroute, die aus einem Routenspeicher auslesbar ist. Die Fahrtroute kann beispielsweise basierend auf einem Fahrziel, das von ein Benutzer eingegeben wird, bestimmt werden. In einer Navigationsdatenbank des Navigationssystems 5 können ferner betriebsrelevante Straßeneigenschaften der im Routenspeicher gespeicherten Straßen gespeichert sein. Die betriebsrelevanten Straßeneigenschaften können allgemein einen Betrieb des Verbrennungsmotors beeinflussen. Die im Routenspeicher gespeicherten Informationen können drahtlos, zum Beispiel über das Internet, oder kabelgebundenen, zum Beispiel über entsprechende Datenträger, aktualisiert werden.

Das Fahrerassistenzsystem 6 kann eine teilweise oder vollständige Automatisierung des Fahrbetriebs des Kraftfahrzeugs 1 ermöglichen. Das Fahrerassistenzsystem 6 kann insbesondere als eine Geschwindigkeitsregelanlage, vorzugsweise eine Abstandsgeschwindigkeitsregelanlage, ausgebildet sein. Das Fahrerassistenzsystem 6 kann insbesondere unter Berücksichtigung der aktuellen Position des Kraftfahrzeugs 1 und der bevorstehenden Fahrtroute einen Betrieb oder einen Betriebsaspekt des Kraftfahrzeugs 1 automatisch steuern. Insbesondere kann das Fahrerassistenzsystem 6 eine Satellitenstandortbestimmungsvorrichtung-gesteuerte Geschwindigkeitsregelanlage, zum Beispiel eine GPS-Geschwindigkeitsregelanlage, sein.

Die Figur 2 zeigt einen variablen Ventiltrieb 10. Der variable Ventiltrieb 10 weist eine Einlassnockenwelle 12 und ein Auslassnockenwelle 112 auf. Die Einlassnockenwelle 12 und die Auslassnockenwelle 112 sind als obenliegenden Nockenwellen angeordnet. Die Einlassnockenwelle 12 und die Auslassnockenwelle 112 bilden ein Doppelnockenwellensystem. Das Doppelnockenwellensystem ist als ein sogenanntes DOHC-System (engl. double overhead camshaft) ausgebildet, da die Einlassnockenwelle 12 und die Auslassnockenwelle 112 oberhalb eines Zylinderkopfes 13 des Verbrennungsmotors angeordnet sind. Alternativ könnte die Einlassnockenwelle 12 oder die Auslassnockenwelle 112 beispielsweise ein sogenanntes SOHC-System bilden (engl. single overhead camshaft). In anderen Ausführungsformen kann die Einlassnockenwelle 12 und/oder die Auslassnockenwelle 112 auch als untenliegende Nockenwelle angeordnet sein. Es ist ebenso denkbar, dass eine oder mehrere gemischte Nockenwellen zum Betätigen von Ein- und Auslassventilen vorgesehen sind.

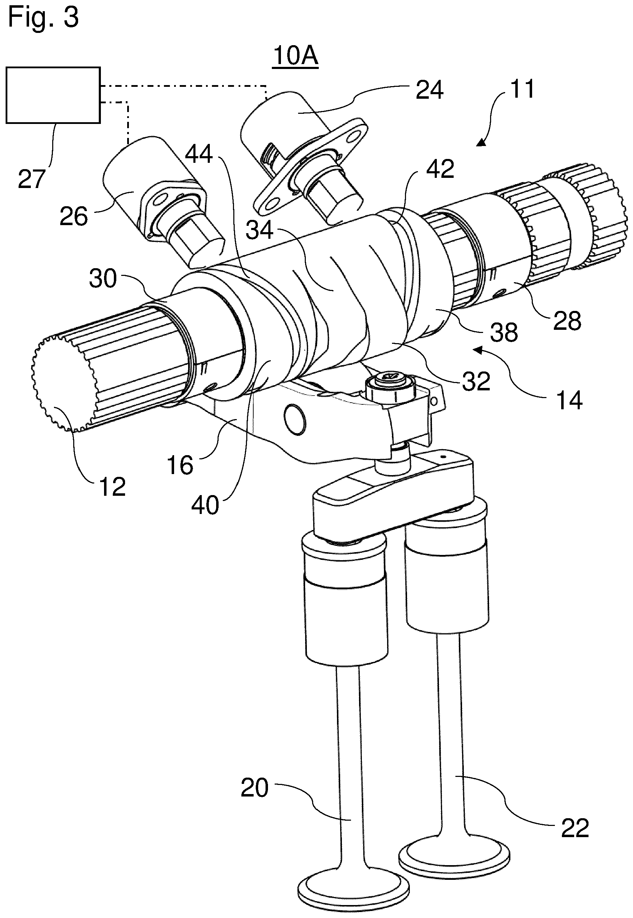

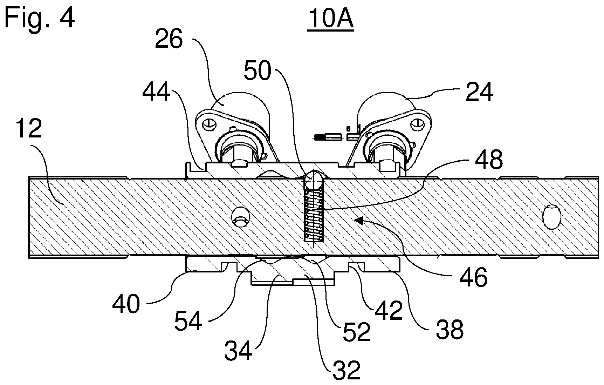

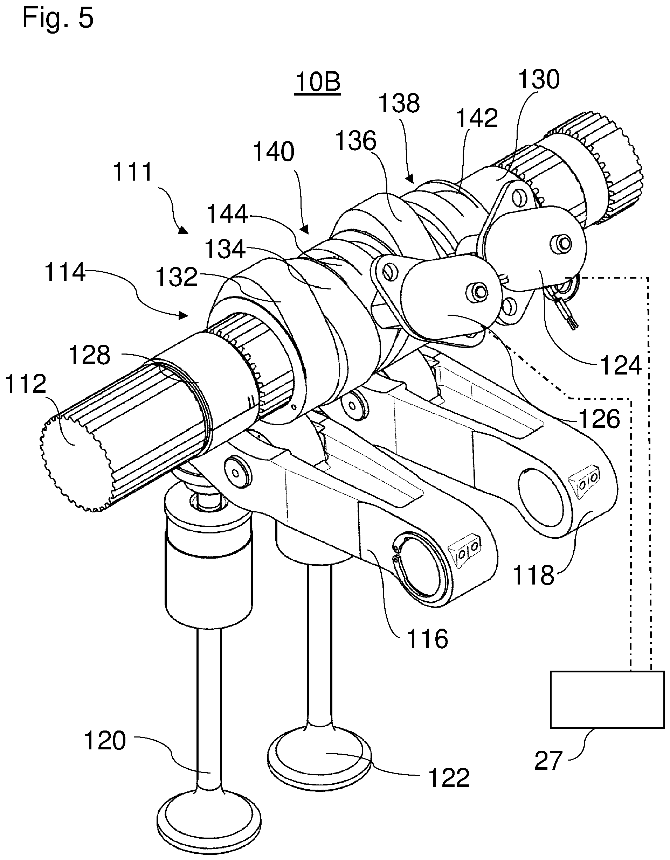

Auf der Einlassnockenwelle 12 und der Auslassnockenwelle 112 ist jeweils mindestens ein Schiebenockensystem 11, 111 angeordnet. Das Schiebenockensystem 11 des einlassseitigen Ventiltriebs 10A ist unter Bezugnahme auf die Figuren 3 und 4 näher beschrieben. Das Schiebenockensystem 111 des auslassseitigen Ventiltriebs 10B ist unter Bezugnahme auf die Figuren 5 bis 7 näher beschrieben.

In der Figur 3 ist der einlassseitige variable Ventiltrieb 10A gezeigt. Der variable Ventiltrieb 10A weist die Einlassnockenwelle 12 und einen Nockenträger 14 auf. Zusätzlich weist der variable Ventiltrieb 10A eine Übertragungsvorrichtung 16 sowie ein erstes und zweites Einlassventil 20 und 22 auf. Zudem weist der variable Ventiltrieb 10A einen ersten Aktor 24 und einen zweiten Aktor 26 auf. Der Nockenträger 14, die Übertragungsvorrichtung 16 sowie die Aktoren 24 und 26 bilden ein Schiebenockensystem 11. Die Einlassnockenwelle 12 betätigt die Eingangsventile 20 und 22.

Auf der Einlassnockenwelle 12 ist der Nockenträger 14 drehfest angeordnet. Der Nockenträger 14 ist zusätzlich axial verschiebbar entlang einer Längsachse der Einlassnockenwelle 12 angeordnet. Der Nockenträger 14 kann zwischen einem ersten Anschlag 28 und einem zweiten Anschlag 30 axial verschiebbar sein.

Auf der Einlassnockenwelle 12 sind mehrere Schiebenockensysteme 11 vorgesehen, sodass für jeden Zylinder des Verbrennungsmotors ein Schiebenockensystem 11 zur zylinderselektiven Betätigung des mindestens einen Einlassventils 20, 22 des jeweiligen Zylinders zur Verfügung steht.

Der Nockenträger 14 weist zwei Nocken 32 und 34 auf, die in einer Längsrichtung des Nockenträgers 14 und der Einlassnockenwelle 12 voneinander versetzt sind. Der erste Nocken 32 und der zweite Nocken 34 sind in einem Mittelabschnitt des Nockenträgers 14 angeordnet. Der erste Nocken 32 und der zweite Nocken 34 grenzen aneinander.

Der erste Nocken 32 ist zur Betätigung der Einlassventile 20 und 22 in einem Normalbetrieb ausgebildet. Im Normalbetrieb schließen die Einlassventile 20 und 22 am Ende des Einlasstakts im Bereich eines unteren Totpunkts einer Kolbenbewegung gemäß einem Diesel- oder Ottokreisprozess.

Der zweite Nocken 34 ist für einen Betrieb mit vorgezogenem Schließzeitpunkt gegenüber dem Normalbetrieb ausgebildet. Der zweite Nocken 34 ist insbesondere für einen Millerbetrieb ausgebildet, bei dem in einem Bereich vordem unteren Totpunkt der Kolbenbewegung gemäß einem Miller-Kreisprozess das Einlassventil früher geschlossen wird als bei einem Normalbetrieb (Diesel- oder Ottokreisprozess).

Im Millerbetrieb schließen die Einlassventile 20, 22 früher. Damit gelangt weniger Luft in den Brennraum. Dies führt einerseits dazu, dass der Verbrennungsmotor weniger Arbeit für den Ladungswechsel (d. h. Einlassen von Frischluft und Auslassen von Abgas) benötigt. Durch die verringerte Arbeit kann in bestimmten Lastbereichen eine Kraftstoffeffizienz erhöht, d. h. ein Kraftstoffverbrauch gesenkt, werden. Der Millerbetrieb kann auch dazu genutzt werden, eine Abgastemperatur zu erhöhen. Dadurch, dass weniger Luft in den Brennraum gelangt, kann bei gleichbleibender Kraftstoffeinspritzung ein Verbrennungsluftverhältnis λ verringert werden. Das Kraftstoff-Luft-Gemisch wird dadurch fetter oder reicher. Die Verbrennung des fetteren Gemischs führt zu einer Erhöhung der Abgastemperatur.

Der Nockenträger 14 weist zudem einen ersten nockenfreien Abschnitt 38 und einen zweiten nockenfreien Abschnitt 40 auf. Der erste nockenfreie Abschnitt 38 und der zweite nockenfreie Abschnitt 40 sind an gegenüberliegenden Enden des Nockenträgers 14 angeordnet. Im ersten nockenfreien Abschnitt 38 erstreckt sich eine erste Eingriffsspur (Schaltkulisse) 42 spiralförmig um eine Längsachse des Nockenträgers 14. Im zweiten nockenfreien Abschnitt 40 erstreckt sich eine zweite Eingriffsspur (Schaltkulisse) 44 spiralförmig um die Längsachse des Nockenträgers 14.

Zum Verschieben des Nockenträgers 14 zwischen den Anschlägen 28 und 30 können die Aktoren 24 und 26 mit ausfahrbaren Elementen (nicht im Detail gezeigt) selektiv in die Eingriffsspuren 42, 44 eingreifen. Im Einzelnen kann der erste Aktor 24 selektiv in die erste Eingriffsspur 42 zum Verschieben des Nockenträgers 14 von einer ersten Axialposition zu einer zweiten Axialposition eingreifen. In der ersten Axialposition liegt der Nockenträger 14 an dem zweiten Anschlag 30 an. In der zweiten Axialposition liegt der Nockenträger 14 an dem ersten Anschlag 28 an. In der Figur 3 ist der Nockenträger 14 in der ersten Axialposition dargestellt. Der zweite Aktor 26 wiederum kann selektiv in die zweite Eingriffsspur 44 eingreifen. Dann wird der Nockenträger 14 von der zweiten Axialposition zu der ersten Axialposition verschoben. Der erste Aktor 24 und der zweite Aktor 26 werden von einer schematisch dargestellten Steuereinheit 27 angesteuert. Die Steuereinheit 27 kann Teil des Fahrerassistenzsystems 6 (siehe Figur 1) sein oder mit dem Fahrerassistenzsystem 6 verbunden sein.

Die Verschiebung wird dadurch ausgelöst, dass das ausgefahrene Element des jeweiligen Aktors 24, 26 bezüglich einer Axialrichtung der Einlassnockenwelle 12 ortsfest ist. Folglich wird der verschiebbare Nockenträger 14 aufgrund der Spiralform der Eingriffsspuren 42, 44 in einer Längsrichtung der Einlassnockenwelle 12 verschoben, wenn das ausgefahrene Element in die jeweilige Eingriffsspur 42, 44 eingreift. Am Ende des Verschiebevorgangs wird das verschiebbare Element des jeweiligen Aktors 24, 26 von der jeweiligen Eingriffsspur 42, 44 entgegengesetzt zu der Ausfahrrichtung geführt und somit eingefahren. Das verschiebbare Element des jeweiligen Aktors 24, 26 gelangt außer Eingriff mit der jeweiligen Eingriffsspur 42, 44.

Die Übertragungsvorrichtung 16 stellt eine Wirkverbindung zwischen dem Nockenträger 14 und den Einlassventilen 20, 22 her. Die Einlassventile 20, 22 werden betätigt (geöffnet), wenn der erste Nocken 32 oder der zweite Nocken 34 die Übertragungsvorrichtung 16 nach unten drückt.

Befindet sich der Nockenträger 14 in der ersten Axialposition, ist die erste Übertragungsvorrichtung 16 in Wirkverbindung zwischen dem ersten Nocken 32 und den Einlassventilen 20, 22. Mit anderen Worten gesagt, ist die Übertragungsvorrichtung 16 in der ersten Axialposition des Nockenträgers 14 nicht in Wirkverbindung zwischen dem zweiten Nocken 34 und den Einlassventilen 20, 22. Die Einlassventile 20, 22 werden gemäß einer Kontur des ersten Nockens 32 betätigt. In der zweiten Axialposition des Nockenträgers 14 ist die Übertragungsvorrichtung 16 in Wirkverbindung zwischen dem zweiten Nocken 34 und den Einlassventilen 20, 22, die gemäß einer Kontur des zweiten Nockens 34 betätigt werden.

In der dargestellten Ausführungsform ist die Übertragungsvorrichtung 16 als ein Schlepphebel ausgebildet. In anderen Ausführungsformen kann die Übertragungsvorrichtung 16 als Kipphebel oder Stößel ausgebildet sein. In einigen Ausführungsformen kann die Übertragungsvorrichtung 16 einen Nockenfolger, zum Beispiel in Form einer drehbaren Rolle, aufweisen.

Unter Bezugnahme auf Figur 4 ist eine Arretierungsvorrichtung 46 gezeigt. Die Arretierungsvorrichtung 46 weist ein elastisches Element 48 und einen Sperrkörper 50 auf. Das elastische Element 48 ist in einem Sackloch der Einlassnockenwelle 12 angeordnet. Das elastische Element 48 spannt den Sperrkörper 50 gegen den Nockenträger 14 vor. In einer Innenumfangsfläche des Nockenträgers 14 sind eine erste und zweite Ausnehmung 52 und 54 angeordnet. Zum Arretieren des Nockenträgers 14 wird der Sperrkörper 50 bspw. in die erste Ausnehmung 52 gedrückt, wenn der Nockenträger 14 in der ersten Axialposition ist. In der zweiten Axialposition des Nockenträgers 14 wird der Sperrkörper 50 in die zweite Ausnehmung 54 gedrückt. In der Figur 5 ist der auslassseitige variable Ventiltrieb 10B gezeigt. Der variable Ventiltrieb 10B weist die Auslassnockenwelle 112 und einen Nockenträger 114 auf. Zusätzlich weist der variable Ventiltrieb 10B eine erste und zweite Übertragungsvorrichtung 116 und 118 sowie ein erstes und zweites Auslassventil 120 und 122 auf. Zudem weist der variable Ventiltrieb 10B einen ersten Aktor 124 und einen zweiten Aktor 126 auf. Der Nockenträger 114, die Übertragungsvorrichtungen 116 und 118 sowie die Aktoren 124 und 126 bilden ein Schiebenockensystem 111.

Auf der Auslassnockenwelle 112 sind mehrere Schiebenockensysteme 111 vorgesehen, sodass für jeden Zylinder des Verbrennungsmotors ein Schiebenockensystem 111 zur zylinderselektiven Betätigung des mindestens einen Auslassventils 120, 122 des jeweiligen Zylinders zur Verfügung steht.

Auf der Auslassnockenwelle 112 ist der Nockenträger 114 drehfest angeordnet. Der Nockenträger 114 ist zusätzlich axial verschiebbar entlang einer Längsachse der Auslassnockenwelle 112 angeordnet. Der Nockenträger 114 kann zwischen einem ersten Anschlag 128 und einem zweiten Anschlag 130 axial verschiebbar sein.

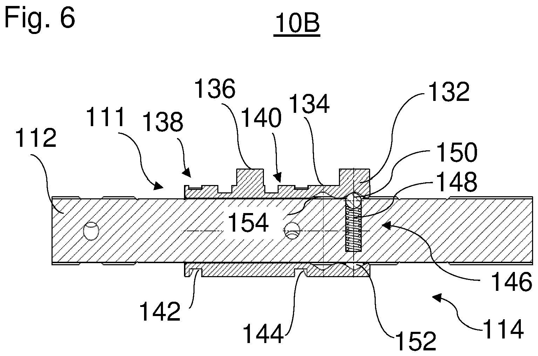

Unter Bezugnahme auf die Figuren 5 und 6 ist nachfolgend der Nockenträger 114 beschrieben. Der Nockenträger 114 weist drei Nocken 132, 134 und 136 auf, die in einer Längsrichtung des Nockenträgers 114 und der Auslassnockenwelle 112 voneinander versetzt sind. Der erste Nocken 132 ist an einem ersten Ende des Nockenträgers 114 angeordnet und für einen Normalbetrieb ausgebildet, wie später beispielhaft im Detail beschrieben. Der zweite Nocken 134 ist angrenzend an den ersten Nocken 132 angeordnet und für einen Motorbremsbetrieb ausgebildet, wie später ebenfalls beispielhaft im Detail beschrieben. Der Motorbremsbetrieb kann zum Verlangsamen und/oder Bremsen des Kraftfahrzeugs bei Bergabfahrten verwendet werden. Der Motorbremsbetrieb kann zusätzlich während eines Hochschaltunterstützungsbetriebs verwendet werden. Der dritte Nocken 136 ist beabstandet zu dem zweiten Nocken 134 und dem zweiten Ende des Nockenträgers 114 angeordnet. Der dritte Nocken 136 ist für den Normalbetrieb ausgebildet. Der dritte Nocken 136 ist wie der ersten Nocken 132 geformt.

Der Nockenträger 114 weist zudem einen ersten nockenfreien Abschnitt 138 und einen zweiten nockenfreien Abschnitt 140 auf. Der erste nockenfreie Abschnitt 138 ist am zweiten Ende des Nockenträgers 114 angeordnet. Der zweite nockenfreie Abschnitt 140 ist zwischen dem zweiten Nocken 134 und dem dritten Nocken 136 angeordnet. Im ersten nockenfreien Abschnitt 138 erstreckt sich eine erste Eingriffsspur (Schaltkulisse) 142 spiralförmig um eine Längsachse des Nockenträgers 114. Im zweiten nockenfreien Abschnitt 140 erstreckt sich eine zweite Eingriffsspur (Schaltkulisse) 144 spiralförmig um die Längsachse des Nockenträgers 114.

Zum Verschieben des Nockenträgers 114 zwischen den Anschlägen 128 und 130 können die Aktoren 124 und 126 mit ausfahrbaren Elementen (nicht im Detail gezeigt) selektiv in die Eingriffsspuren 142, 144 eingreifen. Im Einzelnen kann der erste Aktor 124 selektiv in die erste Eingriffsspur 142 zum Verschieben des Nockenträgers 114 von einer Axialposition zu einer anderen Axialposition eingreifen. In einer ersten Axialposition liegt der Nockenträger 114 an dem zweiten Anschlag 130 an. In einer zweiten Axialposition liegt der Nockenträger 114 an dem ersten Anschlag 128 an. In der Figur 5 ist der Nockenträger 114 in der ersten Axialposition dargestellt. Der zweite Aktor 126 wiederum kann selektiv in die zweite Eingriffsspur 144 eingreifen. Dann wird der Nockenträger 114 von der ersten Axialposition zu der zweiten Axialposition verschoben. Der erste Aktor 124 und der zweite Aktor 126 werden von der schematisch dargestellten Steuereinheit 27 angesteuert.

Die Verschiebung wird dadurch ausgelöst, dass das ausgefahrene Element des jeweiligen Aktors 124, 126 bezüglich einer Axialrichtung der Auslassnockenwelle 112 ortsfest ist. Folglich wird der verschiebbare Nockenträger 114 aufgrund der Spiralform der Eingriffsspuren 142, 144 in einer Längsrichtung der Auslassnockenwelle 112 verschoben, wenn das ausgefahrene Element in die jeweilige Eingriffsspur 142, 144 eingreift. Am Ende des Verschiebevorgangs wird das verschiebbare Element des jeweiligen Aktors 124, 126 von der jeweiligen Eingriffsspur 142, 144 entgegengesetzt zu der Ausfahrrichtung geführt und somit eingefahren. Das verschiebbare Element des jeweiligen Aktors 124, 126 gelangt außer Eingriff mit der jeweiligen Eingriffsspur 142, 144.

Die erste Übertragungsvorrichtung 116 und die zweite Übertragungsvorrichtung 118 stellen eine Wirkverbindung zwischen dem Nockenträger 114 und den Auslassventilen 120, 122 her. Das erste Auslassventil 120 wird betätigt (geöffnet), wenn der erste Nocken 132 oder der zweite Nocken 134 die erste Übertragungsvorrichtung 116 nach unten drückt. Das zweite Auslassventil 122 wird betätigt (geöffnet) wenn der dritte Nocken 136 die zweite Übertragungsvorrichtung 118 nach unten drückt.

Befindet sich der Nockenträger 114 in der ersten Axialposition (wie in den Figuren 1 bis 4 gezeigt), ist die erste Übertragungsvorrichtung 116 in Wirkverbindung zwischen dem ersten Nocken 132 und dem ersten Auslassventil 120. Mit anderen Worten gesagt, ist die erste Übertragungsvorrichtung 116 in der ersten Axialposition des Nockenträgers 114 nicht in Wirkverbindung zwischen dem zweiten Nocken 134 und dem ersten Auslassventil 120. Das erste Auslassventil 120 wird gemäß einer Kontur des ersten Nockens 132 betätigt. In der zweiten Axialposition des Nockenträgers 114 ist die erste Übertragungsvorrichtung 116 in Wirkverbindung zwischen dem zweiten Nocken 134 und dem ersten Auslassventil 120. Das erste Auslassventil 120 wird gemäß einer Kontur des zweiten Nockens 134 betätigt.

In der ersten Axialposition des Nockenträgers 114 ist die zweite Übertragungsvorrichtung 118 in Wirkverbindung zwischen dem dritten Nocken 136 und dem zweiten Auslassventil 122. Das zweite Auslassventil 122 wird gemäß einer Kontur des dritten Nockens 136 betätigt. In der zweiten Axialposition des Nockenträgers 114 betätigt die zweite Übertragungsvorrichtung 118 das zweite Auslassventil 122 nicht. In der zweiten Axialposition des Nockenträgers 114 liegt ein Kontaktbereich 118A der zweiten Übertragungsvorrichtung 118 an der gleichen Axialposition bezüglich der Auslassnockenwelle 112 wie der erste nockenfreie Abschnitt 138. Der erste nockenfreie Abschnitt 138 weist keine Erhebung zum Betätigen der zweiten Übertragungsvorrichtung 118 auf. Ist der Nockenträger 114 in der zweiten Axialposition, wird das zweite Auslassventil 122 nicht betätigt.

Der erste nockenfreie Abschnitt 138 hat somit zwei Funktionen. Einerseits nimmt der erste nockenfreie Abschnitt 138 die erste Führungsspur 142 auf. Andererseits dient der erste nockenfreie Abschnitt 138 dazu, dass keine Betätigung des zweiten Auslassventils 142 in der zweiten Axialposition des Nockenträgers 114 erfolgt. Diese Funktionsintegration ist aus Bauraumgründen günstig.

In der dargestellten Ausführungsform sind die erste Übertragungsvorrichtung 116 und die zweite Übertragungsvorrichtung 118 jeweils als ein Schlepphebel ausgebildet. In anderen Ausführungsformen können die Übertragungsvorrichtungen 116 und 118 als Kipphebel oder Stößel ausgebildet sein. In einigen Ausführungsformen können die Übertragungsvorrichtungen 116 und 118 Nockenfolger, zum Beispiel in Form von drehbaren Rollen, aufweisen.

Unter Bezugnahme auf Figur 6 ist eine Arretierungsvorrichtung 146 gezeigt. Die Arretierungsvorrichtung 146 weist ein elastisches Element 148 und einen Sperrkörper 150 auf. Das elastische Element 148 ist in einem Sackloch der Auslassnockenwelle 112 angeordnet. Das elastische Element 148 spannt den Sperrkörper 150 gegen den Nockenträger 114 vor. In einer Innenumfangsfläche des Nockenträgers 114 sind eine erste und zweite Ausnehmung 152 und 154 angeordnet. Zum Arretieren des Nockenträgers 114 wird der Sperrkörper 150 in die erste Ausnehmung 152 gedrückt, wenn der Nockenträger 114 in der ersten Axialposition ist. In der zweiten Axialposition des Nockenträgers 114 wird der Sperrkörper 150 in die zweite Ausnehmung 154 gedrückt.

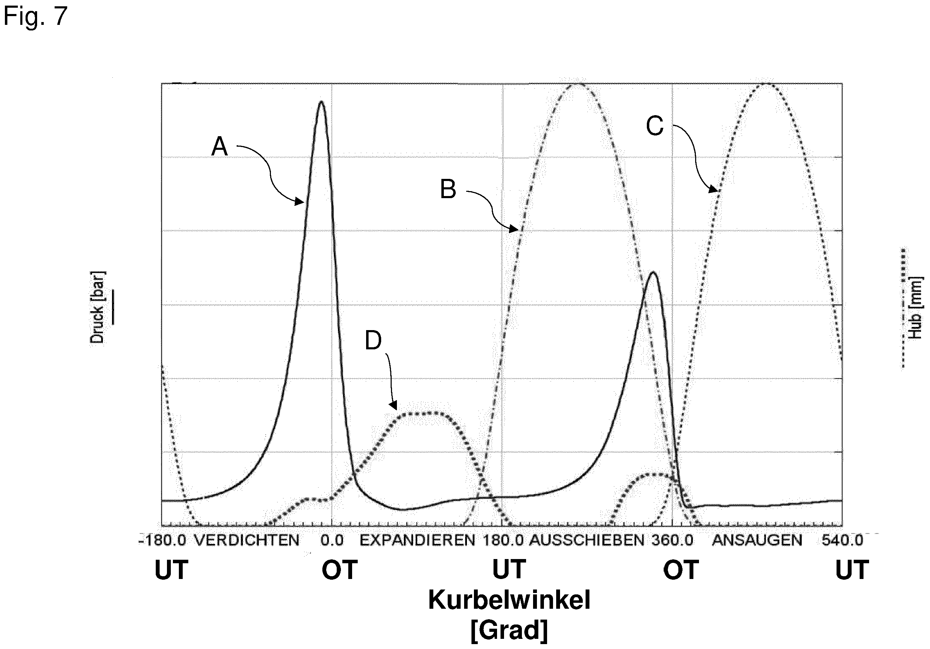

Unter Bezugnahme auf Figur 7 sind nachfolgend die Steuerung des ersten Auslassventils 120 sowie dessen Einfluss auf einen Zylinderdruck beschrieben. Die Figur 7 zeigt einen vollständigen Viertakt-Zyklus bestehend aus Verdichten, Expandieren, Ausschieben und Ansaugen.

Die Kurve A beschreibt den Verlauf des Zylinderdrucks im Motorbremsbetrieb, wenn der zweite Nocken 134 in Wirkverbindung mit dem ersten Auslassventil 120 ist. Die Kurve B zeigt den Verlauf des Ventilhubs des ersten Auslassventils 120, wenn der erste Nocken 132 in Verbindung mit dem ersten Auslassventil 120 ist (d. h. während des Normalbetriebs). Die dritte Kurve C zeigt den Verlauf des Ventilhubs eines Einlassventils sowohl während des Normalbetriebs und im Motorbremsbetrieb. Die Kurve D zeigt den Verlauf des Ventilhubs des ersten Auslassventils 120, wenn der zweite Nocken 134 in Wirkverbindung mit dem ersten Auslassventil 120 ist (d. h. während des Motorbremsbetriebs).

Die Kurve B zeigt, dass das Auslassventil im Normalbetrieb während des Ausschiebetaktes offen ist. Die Kurve C zeigt, dass das Einlassventil im Normalbetrieb und im Bremsbetrieb während des Ansaugtaktes (Einlasstaktes) offen ist.

Die Kurve D zeigt, dass das Auslassventil zum Ende des Verdichtungstaktes im Bereich des oberen Totpunkts bei rund 60° KW bis 100° KW vor dem oberen Totpunkt leicht geöffnet wird. Am oberen Totpunkt wird das Auslassventil weiter geöffnet und schließt am Ende des Expansionstaktes ungefähr am unteren Totpunkt. Das Öffnen des Auslassventils zum Ende des Verdichtungstaktes bewirkt, dass die verdichtete Luft im Zylinder durch das geöffnete Auslassventil in das Abgassystem durch den sich zum oberen Totpunkt bewegenden Kolben geschoben wird. Die zuvor verrichtete Verdichtungsarbeit bremst die Kurbelwelle und somit den Verbrennungsmotor. Der Zylinderdruck steigt im Verdichtungstakt zunächst an, sinkt dann jedoch infolge der Öffnung des Auslassventils schon vor dem oberen Totpunkt ab (vgl. Kurve A). Das offene Auslassventil während des Expansionstaktes bewirkt, dass Luft aus den Abgasleitungen zurück in den Zylinder gesaugt wird. Am Ende des Expansionstaktes ist der Zylinder im Wesentlichen mit Luft aus dem Abgassystem gefüllt.

Die Kurve D zeigt zudem, dass das Auslassventil nach Erreichen des unteren Totpunkts am Ende des Expansionstaktes zunächst geschlossen bleibt. Zum Ende des Ausschiebetaktes öffnet sich das Auslassventil im Bereich des oberen Totpunkts. Die Öffnung erfolgt wiederum bei rund 60° KW bis 100° KW vor dem oberen Totpunkt. Das geschlossene Auslassventil während des Ausschiebetakts bewirkt, dass die im Expansionstakt angesaugte Luft unter Verrichtung von Arbeit verdichtet wird. Der Zylinderdruck steigt an (Kurve A). Die Verrichtungsarbeit bremst die Kurbelwelle und somit den Verbrennungsmotor. Die Öffnung des Auslassventils zum Ende des Ausschiebetaktes führt dazu, dass die Luft durch das geöffnete Auslassventil in das Abgassystem geschoben wird. Im Ansaugtakt wird der Zylinder wieder mit Luft durch das oder die geöffneten Einlassventile (Kurve C) gefüllt. Der Zyklus beginnt erneut.

Wie oben stehend erläutert ist, kommt es durch den Einsatz des zweiten Nockens zur Steuerung des Auslassventils zu einer zweifachen Kompression mit anschließender Dekompression, sodass eine Motorbremsfunktionalität gewährleistet wird.

Zusätzlich kann der Motorbremsbetrieb während eines Hochschaltunterstützungsbetriebs bei einem Gangwechsel verwendet werden, um eine Schaltdauer eines automatischen Getriebes zu verkürzen. Im Hochschaltunterstützungsbetrieb kann eine Drehzahl des Verbrennungsmotors sehr schnell abgesenkt werden. Zudem kann dadurch, dass kein Abgasdrosselventil für die Motorbremse beim Hochschalten verwendet wird, eine Turboladerdrehzahl und ein Ladedruck des Turboladers während des Hochschaltens positiv beeinflusst werden, sodass es zu keinem oder einem nur kleinen Turboloch nach dem Einlegen des höheren Gangs kommt.

Wie beim Vergleich der Kurven B und D auffällt, ist der Ventilhub des Auslassventils im Bremsbetrieb (Kurve D) kleiner als im Normalbetrieb (Kurve B). Der Ventilhub ist zudem beim Öffnen des Auslassventils im Verdichtungs- und Expansionstakt zweistufig. Diese Maßnahmen bewirken, dass die Belastung des variablen Ventiltriebs im Bremsbetrieb verringert wird, da durch die Öffnung des Auslassventils gegen den Druck im Zylinder hohe Belastungen an dem Ventiltrieb auftreten können.

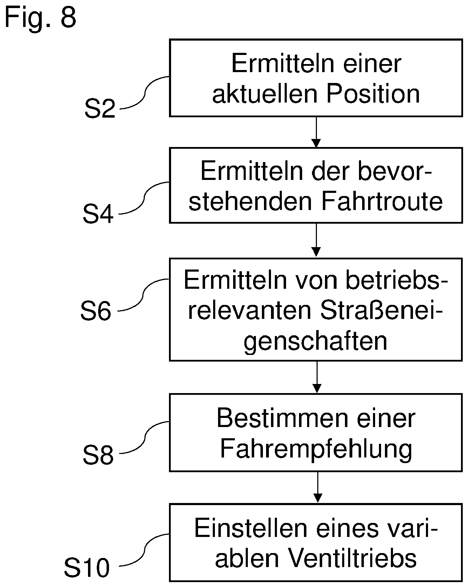

Die Figur 8 zeigt ein beispielhaftes Betriebsverfahren für das Fahrerassistenzsystem 6 (siehe Figur 1).

Im Schritt S2 wird eine aktuelle Position des Kraftfahrzeugs ermittelt. Zur Ermittlung der aktuellen Position kann die Standortbestimmungsvorrichtung 4 (siehe Figur 1) verwendet werden. Auf Grundlage der ermittelten aktuellen Position wird im Schritt S4 die bevorstehende Fahrtroute ermittelt. Die Fahrtroute kann beispielsweise aus dem Routenspeicher des Navigationssystems 5 (siehe Figur 1) ausgelesen oder direkt über eine Datenverbindung empfangen werden. Neben der bevorstehenden Fahrtroute werden im Schritt S6 die betriebsrelevanten Stra-ßeneigenschaften ermittelt. Die Straßeneigenschaften können beispielsweise aus einer Navigationsdatenbank ausgelesen oder über eine Datenverbindung empfangen werden. Beispiele für betriebsrelevante Straßeneigenschaften sind eine Straßentopologie, wie beispielsweise ein Gefälle, eine Steigung und/oder Kurve der Straße, und eine auf der Straße geltende Verkehrsregelung, insbesondere eine Geschwindigkeitsbegrenzung und/oder eine Vorfahrtsregelung. Eine weitere mögliche betriebsrelevante Straßeneigenschaft ist die aktuelle Verkehrssituation, zum Beispiel Stau, auf der bevorstehenden Fahrtroute.

In Abhängigkeit von den betriebsrelevanten Straßeneigenschaften auf der bevorstehenden Fahrtroute des Kraftfahrzeugs und insbesondere in Abhängigkeit von der aktuellen Position des Kraftfahrzeugs wird im Schritt S8 eine Fahrempfehlung durch das Fahrerassistenzsystem 6 bestimmt.

Der Fahrzeugführer des Kraftfahrzeugs kann von der Fahrempfehlung unterrichtet werden. Die Unterrichtung des Kraftfahrzeugführers kann insbesondere die Akzeptanz gegenüber dem Fahrerassistenzsystem 6 (siehe Figur 1) erhöhen. Alternativ oder zusätzlich kann das Fahrerassistenzsystem 6 (siehe Figur 1). Die Fahrempfehlung automatisch umsetzen. Die Fahrempfehlung kann beispielsweise das Betreiben des Kraftfahrzeugs 1 in einem Schwachlastbereich, einen automatischen Gangwechsel in einen höheren Gang oder einen Dauerbremsbetrieb aufweisen.

Basierend auf der Fahrempfehlung kann im Schritt S10 der variable Ventiltrieb 10 (siehe Figur 1) eingestellt werden.

Zum Beispiel kann mindestens ein Schiebenockensystem 11 der Einlassseite zum Schalten zu einer Miller-Steuerzeit von der Steuereinheit 27 angesteuert werden (siehe Figuren 3 und 4). Damit kann je nach Situation Kraftstoff eingespart, eine Abgastemperatur variabel angepasst, ein Betriebspunkt eines Turboladers variabel angepasst und/oder ein Luftdurchsatz variabel angepasst werden. Die Anzahl von Einlassventilen 20, 22 im Millerbetrieb kann beispielsweise in Abhängigkeit von einer gewünschten Abgastemperatur, einem gewünschten Luftdurchsatz, einer Last des Verbrennungsmotors und/oder einem Betriebspunkt des Turboladers des Verbrennungsmotors eingestellt werden.

Es sind verschiedene Situationen denkbar, in denen ein automatisches Umschalten zum Millerbetrieb sinnvoll sein kann. Zum Beispiel ist aufgrund der bevorstehenden Fahrtroute für eine bestimmte Zeitdauer eine niedrige Last des Verbrennungsmotors zu erwarten. Dies kann der Fall bei einer bevorstehenden Fahrtroute mit kleinem Gefälle oder ohne Gefälle sein. Hier kann es sinnvoll sein, mindestens ein Einlassventil in den Millerbetrieb zu schalten. Damit kann beispielsweise eine Kraftstoffeffizienz im Schwachlastbereich verbessert werden, da weniger Arbeit für den Ladungswechsel benötigt wird. Ebenso ist es möglich, eine Abgastemperatur schon vor Erreichen des schwachlastigen Streckenabschnitts zu erhöhen, um bspw. einen SCR-Katalysator noch vor diesem Streckenabschnitt mit Wärmeenergie aufzuladen.

Es ist auch möglich, dass aufgrund der betriebsrelevanten Straßeneigenschaften der bevorstehenden Fahrtroute ein nur sehr kurzer Lastwechsel in einen Schwachlastbereich des Verbrennungsmotors zu erwarten ist. Hier kann auf ein Umschalten in den Millerbetrieb für einen kraftstoffeffizienten Betrieb des Verbrennungsmotors aufgrund des nur sehr kurzen Lastwechsels verzichtet werden. Andererseits könnte auf ein Umschalten von dem Millerbetrieb in den Normalbetrieb verzichtet werden, wenn beispielsweise nur ein sehr kurzer Lastwechsel in den Mittellastbereich bevorsteht.

In einer anderen Ausführungsform kann mindestens ein Schiebenockensystem 111 der Auslassseite zum Schalten in den Motorbremsbetrieb von der Steuereinheit 27 angesteuert werden (siehe Figuren 5 und 6).

So ist es beispielsweise möglich, bei einem langsamen zunehmenden Gefälle der bevorstehenden Fahrtroute einen oder mehrere Zylinder zusätzlich in den Motorbremsbetrieb zu schalten. Hierzu kann beispielsweise das Schiebenockensystem 111 den zweiten Nocken 134 in Wirkverbindung zu dem ersten Auslassventil 120 setzen (siehe Figuren 5 und 6).

In einem anderen Beispiel kann bei einer bevorstehenden Absenkung der zulässigen Höchstgeschwindigkeit und/oder bei einer bevorstehenden Baustelle oder einem bevorstehenden Stau mindestens ein Zylinder in den Motorbremsbetrieb geschaltet werden. So kann eine angemessene Absenkung der Geschwindigkeit des Kraftfahrzeugs pünktlich zum Erreichen des Streckenabschnitts mit abgesenkter Höchstgeschwindigkeit oder bei Erreichen der Baustelle oder des Staus ermöglicht werden.

In einem weiteren Beispiel besteht die Möglichkeit, bereits kurz vor Ende eines Gefälles aus dem Motorbremsbetrieb in einen Normalbetrieb zu schalten. Somit kann das Kraftfahrzeug ausrollen, gegebenenfalls eine Geschwindigkeit erhöhen und ein Motorbremsbetrieb innerhalb eines Streckenabschnitts ohne Gefälle verhindert werden.

In einer anderen Ausführungsvariante kann mindestens ein Schiebenockensystem 111 der Auslassseite in den Hochschaltunterstützungsbetrieb geschaltet werden, wenn die betriebsrelevanten Straßeneigenschaften der bevorstehenden Fahrtroute einen Gangwechsel in einen höheren Gang erforderlich machen. Die Zeit des Gangwechsels kann bei einem Automatikgetriebe durch den Hochschaltunterstützungsbetrieb erheblich verringert werden, da dieser eine schnelle Verringerung der Motordrehzahl ermöglicht.

Wie hierin beispielhaft ausgeführt ist, ermöglicht das Betriebsverfahren für das Fahrerassistenzsystem 6 ein vorrauschauendes Schaltverhalten eines Automatikgetriebes in Kombination mit den thermodynamischen Aspekten des Verbrennungsmotors. Außerdem können bei Verwendung von Schiebenockensystemen unnötige Schaltvorgänge der Schiebenockensysteme beim Durchfahren des Motorkennfelds vermieden werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Kraftfahrzeug
- 2: Verbrennungsmotor
- 4: Standortbestimmungsvorrichtung
- 5: Navigationssystem
- 6: Fahrerassistenzsystem
- 10: Variabler Ventiltrieb
- 10A: Einlassseitiger variabler Ventiltrieb
- 10B: Auslasseitiger variabler Ventiltrieb
- 11: Schiebenockensystem
- 12: Einlassnockenwelle
- 13: Zylinderkopf
- 14: Nockenträger des Schiebenockensystems 11
- 16: Übertragungsvorrichtung (Schlepphebel) des Schiebenockensystems 11
- 20: Erstes Einlassventil des Schiebenockensystems 11
- 22: Zweites Einlassventil des Schiebenockensystems 11
- 24: Erster Aktor des Schiebenockensystems 11
- 26: Zweiter Aktor des Schiebenockensystems 11
- 27: Steuereinheit
- 28: Erster Anschlag des Schiebenockensystems 11
- 30: Zweiter Anschlag des Schiebenockensystems 11
- 32: Erster Nocken des Schiebenockensystems 11
- 34: Zweiter Nocken des Schiebenockensystems 11
- 38: Erster nockenfreier Abschnitt des Schiebenockensystems 11
- 40: Zweiter nockenfreier Abschnitt des Schiebenockensystems 11
- 42: Erste Eingriffsspur des Schiebenockensystems 11
- 44: Zweite Eingriffsspur des Schiebenockensystems 11
- 46: Arretierungsvorrichtung des Schiebenockensystems 11
- 48: Elastisches Element des Schiebenockensystems 11
- 50: Sperrkörper des Schiebenockensystems 11
- 52: Erste Ausnehmung des Schiebenockensystems 11
- 54: Zweite Ausnehmung des Schiebenockensystems 11
- 111: Schiebenockensystem
- 112: Auslassnockenwelle
- 114: Nockenträger des Schiebenockensystems 111
- 116: Erste Übertragungsvorrichtung (erster Schlepphebel) des Schiebenockensystems 111
- 118: Zweite Übertragungsvorrichtung (zweiter Schlepphebel) des Schiebenockensystems 111
- 118A: Kontaktbereich des Schiebenockensystems 111
- 120: Erstes Auslassventil des Schiebenockensystems 111
- 122: Zweites Auslassventil des Schiebenockensystems 111
- 124: Erster Aktor des Schiebenockensystems 111
- 126: Zweiter Aktor des Schiebenockensystems 111
- 128: Erster Anschlag des Schiebenockensystems 111
- 130: Zweiter Anschlag des Schiebenockensystems 111
- 132: Erster Nocken des Schiebenockensystems 111
- 134: Zweiter Nocken des Schiebenockensystems 111
- 136: Dritter Nocken des Schiebenockensystems 111
- 138: Erster nockenfreier Abschnitt des Schiebenockensystems 111
- 140: Zweiter nockenfreier Abschnitt des Schiebenockensystems 111
- 142: Erste Eingriffsspur des Schiebenockensystems 111
- 144: Zweite Eingriffsspur des Schiebenockensystems 111
- 146: Arretierungsvorrichtung des Schiebenockensystems 111
- 148: Elastisches Element des Schiebenockensystems 111
- 150: Sperrkörper des Schiebenockensystems 111
- 152: Erste Ausnehmung des Schiebenockensystems 111
- 154: Zweite Ausnehmung des Schiebenockensystems 111
- A: Zylinderdruck
- B: Auslassventilsteuerkurve
- C: Einlassventilsteuerkurve
- D: Auslassventilsteuerkurve

## Patentansprüche

1. Betriebsverfahren für ein Fahrerassistenzsystem (6), insbesondere eine Geschwindigkeitsregelanlage, vorzugsweise eine Satellitenstandortbestimmungsvorrichtung-gesteuerte Geschwindigkeitsregelanlage, eines Kraftfahrzeugs (1), vorzugsweise Nutzfahrzeugs, mit einem Verbrennungsmotor (2) aufweisend einen variablen Ventiltrieb (10), insbesondere mit einer Mehrzahl von Schiebenockensystemen (11, 111), zum Verstellen der Ventilsteuerkurven der Ein- und/oder Auslassventile (20, 22, 120, 122) des Verbrennungsmotors (2), aufweisend:
Ermitteln mindestens einer betriebsrelevanten Straßeneigenschaft einer Straße auf einer bevorstehenden Fahrtroute des Kraftfahrzeugs (1), wobei die betriebsrelevante Straßeneigenschaft einen Betrieb des Verbrennungsmotors (2) des Kraftfahrzeugs (1) beeinflusst;
Bestimmen einer Fahrempfehlung in Abhängigkeit von der betriebsrelevanten Straßeneigenschaft auf der bevorstehenden Fahrtroute des Kraftfahrzeugs (1); und
Einstellen des variablen Ventiltriebs (10) in Abhängigkeit von der bestimmten Fahrempfehlung.

2. Betriebsverfahren nach Anspruch 1, wobei der variable Ventiltrieb eine Verstellung der Ein- und/oder Auslassventile (20, 22, 120, 122) innerhalb eines vorbestimmten Stellbereichs ermöglicht und die Fahrempfehlung zusätzlich in Abhängigkeit von dem vorbestimmten Stellbereich bestimmt wird.

3. Betriebsverfahren nach Anspruch 1 oder Anspruch 2, ferner aufweisend:
akustisches, visuelles und/oder haptisches Unterrichten eines Fahrzeugführers über die Fahrempfehlung und/oder
automatische Umsetzen der Fahrempfehlung durch das Kraftfahrzeug (1) und/oder das Fahrerassistenzsystem (6).

4. Betriebsverfahren nach einem der vorherigen Ansprüche, wobei:
die betriebsrelevante Straßeneigenschaft ein Topologie, insbesondere ein Gefälle, eine Steigung und/oder Kurve der Straße, der bevorstehenden Fahrtroute aufweist; und/oder
die betriebsrelevante Straßeneigenschaft eine auf der Straße geltende Verkehrsregelung, insbesondere eine Geschwindigkeitsbegrenzung und/oder eine Vorfahrtsregelung, aufweist; und/oder
die betriebsrelevante Straßeneigenschaft eine aktuelle Verkehrssituation aufweist.

5. Betriebsverfahren nach einem der vorherigen Ansprüche, ferner aufweisend:
Ermitteln einer aktuellen Position des Kraftfahrzeugs (1) mittels einer Standortbestimmungsvorrichtung (4), insbesondere mittels einer Satellitenstandortbestimmungsvorrichtung; und/oder
Ermitteln der bevorstehenden Fahrtroute des Kraftfahrzeugs (1), insbesondere Auslesen der bevorstehenden Fahrtroute des Kraftfahrzeugs (1) aus einem Routenspeicher eines Navigationssystems (5) und/oder Empfangen der bevorstehenden Fahrtroute des Kraftfahrzeugs (1), in Abhängigkeit von einer aktuellen Position des Kraftfahrzeugs (1); und/oder
Auslesen der betriebsrelevanten Straßeneigenschaften aus einer Navigationsdatenbank und/oder Empfangen der betriebsrelevanten Straßeneigenschaften; und/oder
Bestimmen der Fahrempfehlung in Abhängigkeit von der betriebsrelevanten Straßeneigenschaft auf der bevorstehenden Fahrtroute des Kraftfahrzeugs (1) und einer aktuellen Position des Kraftfahrzeugs (1).

6. Betriebsverfahren nach einem der vorherigen Ansprüche, wobei:
der variable Ventiltrieb (10) die Steuerzeiten der Ein- und/oder Auslassventile (20, 22, 120, 122) in Abhängigkeit von der bestimmten Fahrempfehlung zylinderselektiv einstellt; und/oder
der variable Ventiltrieb (10) die Steuerzeiten nur für einen Teil der Ein- und/oder Auslassventile (20, 22, 120, 122) in Abhängigkeit von der bestimmten Fahrempfehlung verstellt.

7. Betriebsverfahren nach einem der vorherigen Ansprüche, wobei die Fahrempfehlung einen, insbesondere automatischen, Gangwechsel in einen höheren Gang aufweist und der variable Ventiltrieb (10) in einen Hochschaltunterstützungsbetrieb zum Verkürzen einer Dauer des Gangwechsels geschaltet wird.

8. Betriebsverfahren nach einem der vorherigen Ansprüche, wobei die Fahrempfehlung einen Dauerbremsbetrieb des Verbrennungsmotors (2) aufweist und der variable Ventiltrieb (10) in einen Motorbremsbetrieb geschaltet wird.

9. Betriebsverfahren nach Anspruch 7 oder Anspruch 8, wobei im Hochschaltunterstützungsbetrieb und/oder im Motorbremsbetrieb mindestens ein Auslassventil (120) des Verbrennungsmotors (2) im Verdichtungstakt und/oder im Ausschubtakt zur Kompression von Luft zunächst geschlossen gehalten und vor Erreichen eines oberen Totpunkts einer Kolbenbewegung zur Dekompression der verdichteten Luft geöffnet wird.

10. Betriebsverfahren nach Anspruch 9, wobei:
eine Anzahl von Auslassventilen (120) im Hochschaltunterstützungsbetrieb in Abhängigkeit von der betriebsrelevanten Straßeneigenschaft auf der bevorstehenden Fahrtroute des Kraftfahrzeugs (1), einer erforderlichen Drehzahlabsenkung für den Gangwechsel, einer erforderlichen Drehmomenterhöhung für den Gangwechsel, einer gewünschten Dauer des Gangwechsels, einer gewünschten Turboladerdrehzahl und/oder eines gewünschten Ladedrucks bestimmt wird; und/oder
eine Anzahl von Auslassventilen (120) im Motorbremsbetrieb in Abhängigkeit von der betriebsrelevanten Straßeneigenschaft auf der bevorstehenden Fahrtroute des Kraftfahrzeugs (1), insbesondere einem Gefälle und/oder einer Geschwindigkeitsbegrenzung, bestimmt wird.

11. Betriebsverfahren nach einem der vorherigen Ansprüche, wobei die Fahrempfehlung das Anpassen einer Abgastemperatur, das Anpassen eines Betriebspunkts eines Turboladers des Verbrennungsmotors (2), das Anpassen eines Luftdurchsatzes und/oder das Betreiben des Verbrennungsmotors in einem Schwachlastbereich aufweist und der variable Ventiltrieb (10) in einen Millerbetrieb geschaltet wird.

12. Betriebsverfahren nach Anspruch 11, wobei eine Anzahl von Einlassventilen (120) im Millerbetrieb in Abhängigkeit von der betriebsrelevanten Straßeneigenschaft auf der bevorstehenden Fahrtroute des Kraftfahrzeugs (1), einer gewünschten Abgastemperatur, einem gewünschten Luftdurchsatz, einer Last des Verbrennungsmotors (2) und/oder einem Betriebspunkts eines Turboladers des Verbrennungsmotors (2) bestimmt wird.

13. Betriebsverfahren nach einem der vorherigen Ansprüche, wobei jedes Schiebenockensystem (11, 111) einen auf einer Nockenwelle (12, 112) des Verbrennungsmotors (2) drehfest und axial verschiebbar angeordneten Nockenträger (14) mit einem ersten Nocken (32) für einen Normalbetrieb und einen in einer Längsrichtung der Nockenwelle (12) versetzt angeordneten zweiten Nocken (34) für einen Motorbremsbetrieb, einen Hochschaltunterstützungsbetrieb und/oder einen Millerbetrieb aufweist, wobei das Schiebenockensystem (11, 111) wahlweise den ersten Nocken (32) und mindestens ein Auslassventil (120) und/oder Einlassventil (20, 22) in Wirkverbindung setzt oder den zweiten Nocken (34) und mindestens ein Auslassventil (120) und/oder Einlassventil (20, 22) in Wirkverbindung setzt.

14. Kraftfahrzeug (1), insbesondere Nutzfahrzeug, mit:
einer Standortbestimmungsvorrichtung (4), insbesondere Satellitenstandortbestimmungsvorrichtung; und
einem Fahrerassistenzsystem (6), das dazu ausgebildet ist, das Betriebsverfahren nach einem der vorherigen Ansprüche durchzuführen.

15. Kraftfahrzeug nach Anspruch 14, mit einem Navigationssystem (5) und/oder einem variablen Ventiltrieb (10) für einen mehrere Zylinder aufweisenden Verbrennungsmotor (2) des Kraftfahrzeugs (1), wobei der variable Ventiltrieb (10) aufweist:
mindestens ein Einlassventil (20, 22) und/oder Auslassventil (120, 122);
mindestens eine Nockenwelle (12, 112), insbesondere Einlassnockenwelle und/oder Auslassnockenwelle; und
mehrere Schiebenockensysteme (11, 111) für die mehreren Zylinder, wobei jedes Schiebenockensystem (11, 111) einen Nockenträger (14) aufweist, der auf der Nockenwelle (12) drehfest und axial verschiebbar angeordnet ist und einen ersten Nocken (32) und einen zweiten Nocken (34) aufweist, wobei der erste Nocken (32) und der zweite Nocken (34) in einer Längsrichtung der Nockenwelle (21) versetzt angeordnet sind.
